# EUROPEAN PATENT APPLICATION

(11) **EP 4 458 429 A1**
(43) Date of publication of application: **06.11.2024**
(21) Application number: 24174210.5
(22) Date of filing: 03.05.2024
(51) Int. Cl.: A62C 29/00, F16L 37/00, B05B 1/14, A62C 31/05, A62C 3/02, A62C 31/03, A62C 31/28, B64U 101/47

(54) **A NOZZLE FOR COUPLING TO A DRONE FOR FIGHTING FIRE AND A SYSTEM OF A DRONE AND A NOZZLE**

(30) Priority: 03.05.2023 PT 2023118627
(71) Applicant: Jacinto Marques de Oliveira, Sucessores Lda., 3885-410 Esmoriz (PT); Associação para o Desenvolvimento da Aerodinamica Industrial (ADAI), 3030-289 Coimbra (PT); Sleeklab, Lda., 3030-199 Coimbra (PT); Categoria Funcional, Lda., 4150-250 Porto (PT)
(72) Inventor: YSENBOUT MOGAS, GUILHERME, 4150-250 PORTO (PT); BRANDÃO DE AZEREDO LOUREIRO, JOÃO FILIPE, 4470-196 MAIA (PT); PAIS VIEGAS, CARLOS XAVIER, 3140-348 PEREIRA (PT); CORREIA BATISTA, RAFAEL JOSÉ, 3030-503 COIMBRA (PT); SILVA REIS OLIVEIRA, JACINTO MANUEL, 3885-633 ESMORIZ (PT)
(74) Representative: do Nascimento Gomes, Rui

(57) **Abstract**

The present disclosure falls within the field of firefighting using drones, in particular accessories that can be coupled to drones and that support firefighting activities. The present disclosure defines a nozzle (10) for coupling to a firefighting drone, which allows water to be sprayed autonomously and independently of the structure of a drone, providing advantages such as a better arrangement of the various elements or easier removal of the drone, particularly in circumstances of high flight instability. In addition, its improved configuration allows a greater capacity to spray water and consequently fight a fire.

## Description

### TECHNICAL FIELD

The present disclosure falls within the field of firefighting using drones, in particular accessories that can be coupled to drones and that support firefighting activities.

### STATE OF THE ART

In firefighting scenarios, where the safety of human assets involved is of the utmost priority, it is necessary to have resources that make it possible to efficiently and effectively combat the flames, guaranteeing control of the unpredictability inherent in real fire situations in a forestry, urban or industrial context.

In this context, solutions that make use of drones that are connected to water supply sources by means of hoses are known in the state of the art. These solutions provide a controllable element that is positioned above the fire when fighting the blaze.

However, these solutions are not particularly effective, as they allow little adaptability in controlling the water spray elements and are typically integral systems in which the water emission capacity is integrated into the drone itself.

In a real firefighting scenario, carried out outdoors (for example in a forest fire), there are various factors influencing the erratic behaviour of the water flow, which is intended to be directed towards a specific target such as the source of the fire, or towards a wider area, for example in situations where it is necessary to wet a certain surface in order to create safety corridors for vehicles, animals or people to circulate in highly dangerous environments.

In addition, the turbulence associated with the flow of water as it circulates inside the hose due to the pressure with which it is pumped by a supply source such as a fire engine, the combined effect of the weight of the hose and the volume of water inside the hose on the control of the drone, or phenomena such as wind, are all elements of the instability generated in the drone.

These elements, in a real firefighting scenario, may even be so momentary and unpredictable that the resulting set of forces jeopardises the handling of the drone and could even cause it to fall or collide with trees or other elements on the ground located in its vicinity.

The solution presented here allows water to be sprayed autonomously and independently of the structure of a drone, providing advantages such as a better arrangement of the various elements or easier removal of the drone, particularly in circumstances of high flight instability. In addition, its improved configuration allows a greater capacity to disperse water and consequently fight a fire.

### SUMMARY OF THE DISCLOSURE

The present disclosure comprises a nozzle for coupling to a firefighting drone. The nozzle comprises a water inlet, the water inlet in turn comprising means for coupling to a hose, and two water outlets, each water outlet in turn comprising a mouthpiece allowing the water to be projected to the outside. Additionally:
the water inlet is connected to each of the water outlets by a channel, the water inlet bifurcating into each channel via a first portion of the channel which splits symmetrically in relation to the opposite channel and which is connected to a second portion of the channel where the physical orientation of the water flow is inverted in relation to the water inlet, the second portion of each channel connecting to the corresponding water outlet.

The nozzle further comprises means for coupling to a drone.

The nozzle may comprise water outlet orientation control means at each mouthpiece, wherein the mouthpiece has an adjustable water outlet orientation, the water outlet orientation control means being configured to adjust the orientation of the exiting water at each mouthpiece.

The water outlet control means may be additionally configured to simultaneously adjust the water outlet orientation at each mouthpiece in order to direct the respective jets of water at a single target.

The water outlet orientation control means at each mouthpiece may be additionally configured to control the flow of water exiting each water outlet and corresponding mouthpiece.

The water outlet control means may be additionally configured to simultaneously adjust the pressure/flow of the exiting water at each mouthpiece, in order to maintain the flight stability of a drone coupled to the nozzle.

The nozzle thus constitutes a mechanism that allows the flow delivered to be directed towards a defined objective, by playing with the equilibrium of the moments generated by the intervening forces.

Each mouthpiece may comprise a plurality of formed stabilising grooves.

The hose coupling means may comprise automated means configured to, under an uncoupling instruction, uncouple the hose from the coupling means and consequently from the nozzle.

Additionally, it is possible that
the coupling means comprise a motor connected to two tabs which couple a hose to the coupling means by means of a steel cable, and
under the uncoupling instruction, the motor is activated, the cable is thus pulled and the tabs come out, releasing the ferrule of a hose, and consequently a corresponding hose, while the nozzle remains coupled to a corresponding drone.

The drone coupling means may comprise automated means configured to, under an instruction to uncouple the drone, uncouple the drone from the coupling means and consequently from the nozzle.

The nozzle may additionally comprise wireless communication means, and
the uncoupling of the hose from the coupling means, and consequently from the nozzle, can be carried out upon receipt of an uncoupling instruction via the wireless communication means, and/or
the uncoupling of the drone from the drone coupling means, and consequently from the nozzle, can be carried out upon receipt of an uncoupling instruction via the wireless communication means.

The drone coupling means may be configured to couple the nozzle to an external structure of a drone.

The present disclosure may further comprise a firefighting system comprising a drone and a nozzle according to the present disclosure, wherein the drone is coupled to the nozzle by means of the drone coupling means of the nozzle.

The system may additionally comprise a hose connectable to a water supply point, the drone being configured so that at least one flight parameter of the drone is adjusted based on the thrust caused by the exit of water from each of the mouthpieces of the water outlets of the nozzle.

The drone may comprise i) a plurality of thrusters, each thruster being associated with ii) a motor, iii) means for controlling the motors and thrusters, iv) drone wireless communication means independent of the nozzle wireless communication means and v) an integral outer structure, the thrusters being arranged on the outside of the structure, and the motors, the drone wireless communication means and the motor and thruster control means being arranged on the inside of the structure.

The nozzle may be coupled to the drone at a lower portion of the drone structure, opposite an upper portion where the thrusters are arranged.

### DESCRIPTION OF THE FIGURES

Figure 1 - front schematic representation of a nozzle according to the present disclosure.
Figure 2 - side schematic representation of the nozzle of figure 1.

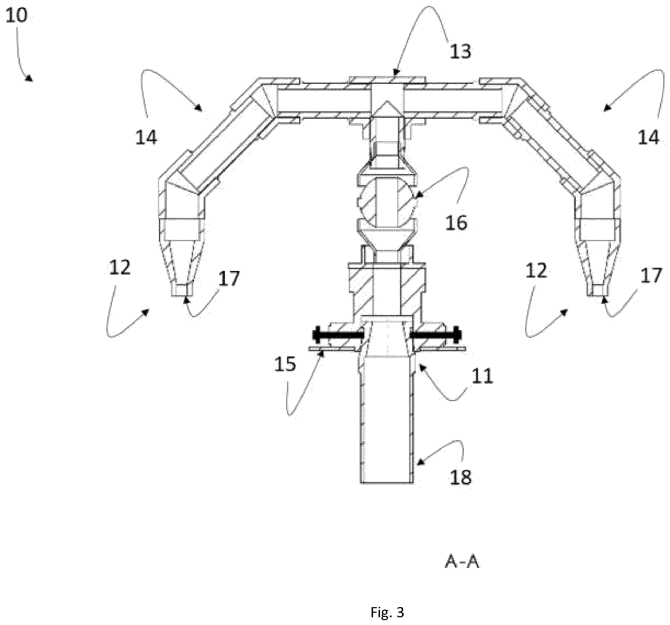

Figure 3 - sectional representation of the nozzle of figure 2, through section A-A.

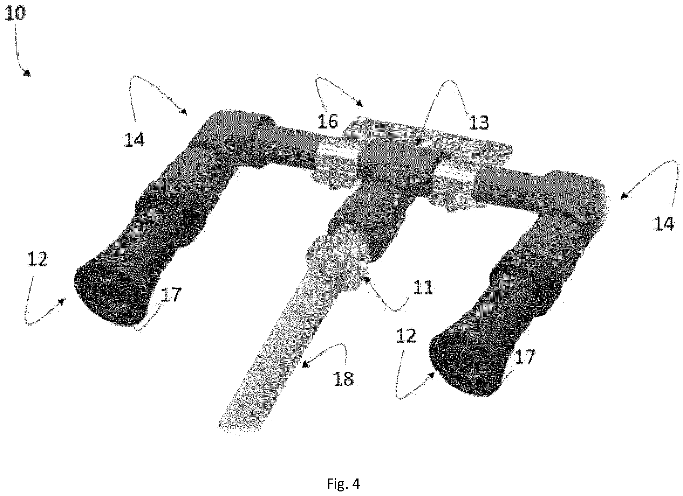

Figure 4 - representation of a second nozzle according to the present disclosure, in perspective view.

### DETAILED DESCRIPTION

The present disclosure comprises a nozzle (10) for coupling to a firefighting drone.

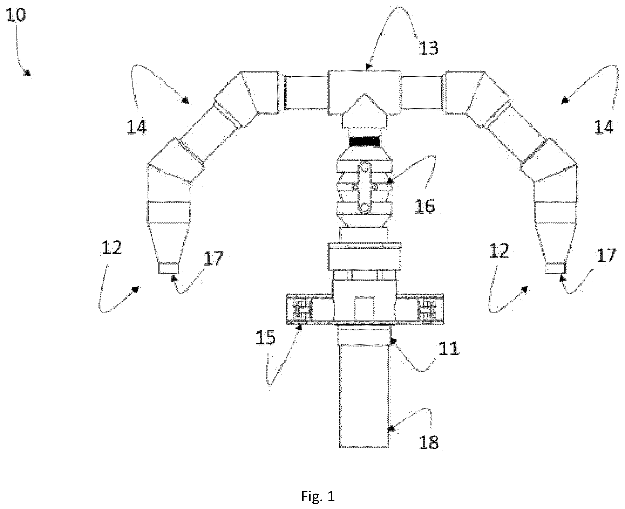

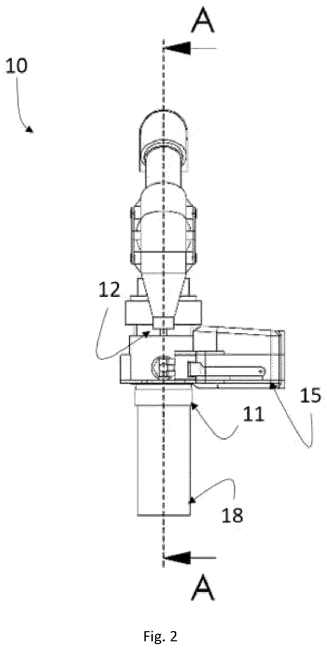

By comprising a water inlet (11) and two outlets, as shown in figures 1 and 2, the water inlet (11) being connected to each of the water outlets (12) by a channel (14), the water inlet (11) bifurcating into each channel (14) via a first portion of the channel (14) which splits symmetrically in relation to the opposite channel (14) and which is connected to a second portion of the channel (14) where the physical orientation of the water flow is inverted in relation to the water inlet (11), the second portion of each channel (14) connecting to the corresponding water outlet (12), the nozzle (10) has a configuration that facilitates water dispersion, as the two outlets are connected by means of identical channels (14) that bifurcate from the inlet and invert the orientation of the water flow, promoting dispersion and reducing the consumption of an associated drone, which has its propulsion supported by the thrust force of the exit of the water through the outlets (12), helping to support the drone and countering the weight of the water column and the hose (18). Each of the channels (14) is symmetrical in relation to the water inlet (11) and consequent bifurcation (13).

Additionally, as it consists of an element autonomous and separate from a drone, it enables easy coupling to drones not specifically designed for firefighting, and also easy uncoupling.

The nozzle (10) of the present disclosure thus constitutes an accessory for drones, especially in situations where it is difficult to reach the operatives on the ground and where the safety of the firefighter is jeopardised when trying to reach an access point for effectively fighting the fire, allowing the drone to reach remote and difficult-to-reach places with the jet of water.

In the operating procedure, water can be pumped from a fire engine with a tank, or through a fixed point, commonly known as a fire hydrant, at high pressure. The water or liquid with similar characteristics flows through the connecting hose (18) until it reaches the entry point of the nozzle (10) of the present disclosure.

The coupling of the nozzle (10) to a drone may be multiaxial, allowing various degrees of freedom in any of the connections at the end of the hose (18), providing flexibility and stability during operation.

The water supply can be provided by means of a hose (18) that can be coupled to the water inlet (11), specifically to the hose coupling means (15). This hose (18) can, in turn, be coupled to a high-pressure water supply element such as a fire engine or to another high-pressure water supply point.

The nozzle (10) can be configured to control the water supply, starting or stopping the supply and subsequent dispersion through the water outlets (12), independently of the operation of the drone.

The various operations of the nozzle (10) can be operated remotely independently of the operation of the associated drone.

The water outlet orientation control means at each mouthpiece (17), in conjunction with the adjustment of the water outlet orientation at each mouthpiece (17), make it possible to better direct the exiting water at a target, with the ability to adjust the direction parameters and the volume of the water so that they can be accurately controlled.

By simultaneously adjusting the water outlet orientation at each mouthpiece (17), in order to direct the respective jets of water at a single target, the water outlet orientation control means promote an equilibrium of the moments generated by intervening forces and better support of the drone associated with the nozzle (10).

In the same way, the water outlet orientation means are additionally configured to simultaneously adjust the pressure/flow of the exiting water at each mouthpiece (17), in order to maintain the flight stability of a drone coupled to the nozzle (10).

The nozzle (10) thus acts as a channelling and stabilising point, capable of directing the flow of water in the desired direction, allowing the operator to control the intensity of the flow and where the firefighting liquid will be projected.

The plurality of stabilising grooves formed in each mouthpiece (17) make it possible to minimise the effect of external factors such as wind, turbulence and the weight of the hose (18), allowing for greater precision and control when directing the water towards a specific target.

The hose coupling means (15), by comprising automated means configured to, under an uncoupling instruction, uncouple the hose (18) from the coupling means and consequently from the nozzle (10), define a safety protocol that allows the functional uncoupling of the drone from the hose (18), enabling the drone to regain its stability and the drone operator to carry out tasks or operation protocols to return the vehicle to base or to a safe position.

In this mode, the nozzle (10) remains coupled to the drone, but with no water supply after the hose (18) is uncoupled.

This safety system is especially useful in situations of emergency where the drone is in a hazardous situation, or when there is a need to carry out an emergency operation to protect the drone or the firefighting team. The safety system for uncoupling the hose (18) and/or nozzle (10) can also be used to allow the nozzle (10) to be replaced without having to remove the drone from the area of operation, thus guaranteeing the continuity of the firefighting operation.

The safety system is therefore designed to allow the functional uncoupling of the drone vehicle from the nozzle (10) in unforeseeable situations that could jeopardise the handling of the drone and even cause it to fall or collide with trees or other elements on the ground located in its vicinity.

In particular, the coupling means comprise a motor connected to two tabs which couple a hose (18) to the coupling means by means of a steel cable and, under the uncoupling instruction, the motor is activated, the cable is thus pulled and the tabs come out, releasing the ferrule of a hose (18), and consequently a corresponding hose (18), while the nozzle (10) remains coupled to a corresponding drone.

Specifically, each motor can be a servomotor and the cable a steel cable. When the servomotor is activated by a signal sent by the drone controller, the cables are pulled and the tabs come out, releasing the ferrule of the hose (18), and consequently the hose (18), allowing the drone to regain its stability and be operated safely. The body of the nozzle (10) remains attached to the drone.

The drone coupling means (16), by comprising automated means configured to, under an instruction to uncouple the drone, uncouple the drone from the coupling means and consequently from the nozzle (10), provide a solution for emergency situations, whereby the nozzle (10) can subsequently be recovered after uncoupling by recoiling the hose (18). For this purpose, when the nozzle (10) is uncoupled from the drone, the nozzle (10) can emit a wireless signal in beacon format.

The uncoupling action can be carried out by means of a mechanism that acts to attach the nozzle (10) to the drone, thus allowing the nozzle (10) to be released without causing damage to the structure of the drone or to the water hose (18).

The nozzle (10) may comprise wireless communication means.

The uncoupling of the hose (18) from the coupling means, and consequently from the nozzle (10), can be carried out upon receipt of an uncoupling instruction via the wireless communication means.

In turn, the uncoupling of the drone from the drone coupling means (16), and consequently from the nozzle (10), can be carried out upon receipt of an uncoupling instruction via the wireless communication means.

This safety system for uncoupling the nozzle (10) may comprise an additional device, part of the system of the present disclosure, which allows the drone operator, by means of a remote control signal, to activate the uncoupling of the nozzle (10) from the drone.

The means for coupling to the hose (18) may comprise a braking system that clamps the hose (18). This braking system ensures that the hose (18) remains firmly in place during operation, even when subjected to strong winds or turbulence.

Since it is an accessory, an autonomous element, the nozzle (10) can be coupled to a drone without the drone needing to have elements particularly adapted to spray water over a fire. In this way, the drone coupling means (16) are configured to couple the nozzle (10) to an external structure of a drone.

The nozzle (10) can thus be applied to the underside of a drone, allowing connection to one end of a hose (18), which will have at the other end a connection to a water supply point such as a fire engine belonging to a fire brigade.

The present disclosure also comprises a firefighting system comprising the nozzle (10) of the present disclosure and a drone, the drone being coupled to the nozzle (10) by means of the drone coupling means (16) of the nozzle (10).

The drone coupling means (16) may define a support structure mountable on the drone, which provides a stable platform for attaching the hose (18). This structure may be lightweight but durable, so as not to add too much weight to the drone and at the same time withstand the forces exerted during operation.

The system of the present disclosure, specifically the drone that it comprises, may include stabilising devices, such as gyroscopes and accelerometers, which can detect any change in the position of the drone and adjust its orientation as required.

In the event of an emergency, the system of the present disclosure may allow the drone to be quickly and safely disconnected from the hose (18) in order to allow the drone to regain its stability and the operator to perform tasks or protocols necessary to return the vehicle to a safe position.

Thus, the uncoupling of the drone from the nozzle (10) and/or the uncoupling of the nozzle (10) from the hose (18) can be initiated automatically based on the detection of an unstable flight situation by the drome. Additionally, after its release, the drone is able to regain its stability by means of gyroscopic self-stabilisation systems and allow the operator to perform tasks or operation protocols to return the vehicle to base or to a safe position.

The system of the present disclosure may additionally include a control panel that allows an operator to adjust pressure/flow parameters and the direction of the water flow based on the specific firefighting needs.

The hose (18) of the system of the present disclosure is connectable to a water supply point, and the drone may be configured so that at least one flight parameter of the drone is adjusted based on the thrust caused by the exit of water from each of the mouthpieces (17) of the water outlets (12) of the nozzle (10). This operation allows good cooperation between the flight of the drone and the thrust caused by the water outlets (12), generally reducing the intensity of the drone's own thrust.

The drone comprises i) a plurality of thrusters, each thruster being associated with ii) a motor, iii) means for controlling the motors and thrusters, iv) drone wireless communication means independent of the wireless communication means of the nozzle (10) and v) an integral outer structure, the thrusters being arranged on the outside of the structure, and the motors, the drone wireless communication means and the motor and thruster control means being arranged on the inside of the structure.

The nozzle (10), being autonomous from the drone, is coupled to the drone at a lower portion of the drone structure, opposite an upper portion where the thrusters are arranged.

The materials used are preferably capable of withstanding high pressures without loss of performance, and lightweight, of a nature capable of withstanding deterioration in both extreme humidity environments and high temperature environments, or a combination of both. It is also desirable to use composite materials or plastics rather than metals, in order to minimise interference with the aircraft's instruments and sensors.

The water flow control mechanism of the nozzle (10) may further include a pressure control mechanism that makes it possible to adjust the pressure of the water flowing through the hose (18). This pressure control mechanism ensures that the water flow remains consistent, even when the pressure changes due to external factors, such as changes in altitude or distance from the fire.

In addition, depending on the nature of the fire and the action required, the format of the jet expelled, which has an influence on the droplet size, can be adapted to the needs of the moment.

The system of the present disclosure may further include a support structure configured to support the weight of the hose (18) and allow it to move freely without affecting the stability of the drone. The support structure is configured to be easily connected and disconnected from the drone, allowing for a quick change of hose (18) in the event of failure or damage.

As will be obvious to a person skilled in the art, this disclosure should not be limited to the details described in this document, and various alterations are possible which remain within the scope of this disclosure.

Obviously, the details set forth above can be combined in different ways, but repetition of all these combinations is avoided here.

## Claims

1. Nozzle (10) for coupling to a firefighting drone, the nozzle (10) comprising a water inlet (11), the water inlet (11) comprising means for coupling to a hose (15), and two water outlets (12), each water outlet (12) comprising a mouthpiece (17) allowing the water to be projected to the outside,
the water inlet (11) being connected to each of the water outlets (12) by a channel (14), the water inlet (11) bifurcating into each channel (14) via a first portion of the channel (14) which splits symmetrically in relation to the opposite channel (14) and which is connected to a second portion of the channel (14) where the physical orientation of the water flow is inverted in relation to the water inlet (11), the second portion of each channel (14) connecting to the corresponding water outlet (12),
the nozzle (10) additionally comprising means for coupling to a drone (16).

2. Nozzle (10) according to the preceding claim, wherein it comprises water outlet orientation control means at each mouthpiece (17) and wherein the mouthpiece (17) has an adjustable water outlet orientation, the water outlet orientation control means being configured to adjust the orientation of the exiting water at each mouthpiece (17).

3. Nozzle (10) according to the preceding claim, wherein the water outlet control means are additionally configured to simultaneously adjust the water outlet orientation at each mouthpiece (17), in order to direct the respective jets of water at a single target.

4. Nozzle (10) according to any one of claims 2-3, wherein the water outlet orientation control means at each mouthpiece (17) are additionally configured to control the flow of water exiting each water outlet (12) and corresponding mouthpiece (17).

5. Nozzle (10) according to any one of claims 2-4, wherein the water outlet control means are additionally configured to simultaneously adjust the pressure of the exiting water at each mouthpiece (17), in order to maintain the flight stability of a drone coupled to the nozzle (10).

6. Nozzle (10) according to any one of the preceding claims, wherein each mouthpiece (17) comprises a plurality of formed stabilising grooves.

7. Nozzle (10) according to any one of the preceding claims, wherein the hose coupling means (15) comprise automated means configured to, under an uncoupling instruction, uncouple the hose (18) from the coupling means and consequently from the nozzle (10).

8. Nozzle (10) according to the preceding claim, wherein
the coupling means comprise a motor connected to two tabs which couple a hose (18) to the coupling means by means of a steel cable, and
under the uncoupling instruction, the motor is activated, the cable is thus pulled and the tabs come out, releasing the ferrule of a hose (18), and consequently a corresponding hose (18), while the nozzle (10) remains coupled to a corresponding drone.

9. Nozzle (10) according to any one of the preceding claims, wherein the drone coupling means (16) comprise automated means configured to, under an instruction to uncouple the drone, uncouple the drone from the coupling means and consequently from the nozzle (10).

10. Nozzle (10) according to the preceding claim, wherein it comprises wireless communication means, and
the uncoupling of the hose (18) from the coupling means, and consequently from the nozzle (10), is carried out upon receipt of an uncoupling instruction via the wireless communication means, and/or
the uncoupling of the drone from the drone coupling means (16), and consequently from the nozzle (10), is carried out upon receipt of an uncoupling instruction via the wireless communication means.

11. Nozzle (10) according to any one of the preceding claims, wherein the drone coupling means (16) are configured to couple the nozzle (10) to an external structure of a drone.

12. Firefighting system comprising a drone and a nozzle (10) according to any one of the preceding claims, the drone being coupled to the nozzle (10) by means of the drone coupling means (16) of the nozzle (10).

13. System according to the preceding claim additionally comprising a hose (18) connectable to a water supply point, the drone being configured so that at least one flight parameter of the drone is adjusted based on the thrust caused by the exit of water from each of the mouthpieces (17) of the water outlets (12) of the nozzle (10).

14. System according to the preceding claim, wherein the drone comprises i) a plurality of thrusters, each thruster being associated with ii) a motor, iii) means for controlling the motors and thrusters, iv) drone wireless communication means independent of the nozzle wireless communication means (10) and v) an integral outer structure, the thrusters being arranged on the outside of the structure, and the motors, the drone wireless communication means and the motor and thruster control means being arranged on the inside of the structure.

15. System according to the previous claim, wherein the nozzle (10) is coupled to the drone at a lower portion of the drone structure, opposite an upper portion where the thrusters are arranged.
